# EUROPEAN PATENT SPECIFICATION

(11) **EP 1 273 467 B1**
(45) Date of publication and mention of the grant of the patent: **12.09.2007**
(21) Application number: 02711469.3
(22) Date of filing: 12.02.2002
(51) Int. Cl.: B60H 1/00, B60H 1/22, B60H 1/32, F25B 47/02

(54) **ON-VEHICLE AIR CONDITIONER**
FAHRZEUGKLIMAANLAGE
CLIMATISATION DE BORD POUR VEHICULE

(30) Priority: 13.02.2001 JP 2001003599
(43) Date of publication of application: 08.01.2003
(73) Proprietor: SANYO ELECTRIC CO., LTD., Moriguchi-shi, Osaka 570-0083 (JP)
(72) Inventor: EBARA, Toshiyuki c/o SANYO ELECTRIC CO., LTD., Moriguchi-shi, Osaka 570-0083 (JP); IZAKI, Hirokazu c/o SANYO ELECTRIC CO., LTD., Moriguchi-shi, Osaka 570-0083 (JP); MASUDA, Tetsuya c/o SANYO ELECTRIC CO., LTD., Moriguchi-shi, Osaka 570-0083 (JP); MIZUKAMI, Kazuaki c/o SANYO ELECTRIC CO., LTD., Moriguchi-shi, Osaka 570-0083 (JP)
(74) Representative: Parry, Simon James
(86) International application number: PCT/JP2002/001154
(87) International publication number: WO 2002/064388

(56) References cited:
- EP-A- 0 179 304
- EP-A- 0 356 716
- DE-A- 19 629 114
- JP-A- 5 238 248
- JP-A- 5 238 249
- JP-A- 5 319 077
- JP-A- 7 055 296
- JP-A- 11 198 637
- JP-A- 11 301 254
- JP-A- 61 008 574
- JP-U- 6 064 076
- US-A- 5 284 025
- PATENT ABSTRACTS OF JAPAN vol. 1999, no. 12, 29 October 1999 (1999-10-29) & JP 11 198637 A (MITSUBISHI HEAVY IND LTD), 27 July 1999 (1999-07-27)
- PATENT ABSTRACTS OF JAPAN vol. 1995, no. 06, 31 July 1995 (1995-07-31) & JP 7 055296 A (MITSUBISHI HEAVY IND LTD), 3 March 1995 (1995-03-03)

## Description

### Field of the Invention

The present invention concerns an on-vehicle air-conditioner for air-conditioning used for vehicles such as hybrid cars using electricity and gasoline as energy source, idle stop coping cars, or others.

### Background Art

Ordinary vehicles travel taking the power out of an internal combustion engine using gasoline as fuel, and such vehicles have an on-board refrigeration circuit provided with a compressor driven by the internal combustion engine, and the cooling is performed by evaporating refrigerant in an evaporator for performing the cooling, and cooling the car interior air by the generated cold heat.

In addition, the heating is performed by heating the car interior air by the heat of the cooling water for cooling the engine.

Nonetheless, as such vehicles take out the driving power through combustion of gasoline or others, the control or regulation of hazardous materials contained in the exhaust gas thereof comes to be desired zealously.

Moreover, conventionally, as refrigerant for cooling and refrigeration apparatus, for instance, chlorodifluoromethane (R22, boiling point 140.8 °C) or the like have been used. However, R22 of the like become the object of the fluorine regulation because they destroy the ozone layer by their high latency of ozone destruction, when they are released in the atmosphere and attain the ozone layer in the upper air of the Earth.

The destruction of this ozone layer is provoked by chlorine group (Cl) in the refrigerant. There, refrigerants not containing chlorine group, for example, alternative refrigerants such as difluoromethane (HFC-32, R32, boiling point -52 °C) or others have been proposed; however, they ended up by being included in gases to be regulated by The 3rd Session of the Conference of the Parties to the United Nations Framework Convention on Climate Change, Kyoto, 1997, because Global Warming Potential (GWP) is 1300 to 1900, and their use comes to be difficult.

In such a trend of attaching importance to the environment, hydrocarbon system refrigerants such as propane, butane, i-butane, pentane, i-pentane, and natural refrigerants such as CO₂ or others existing in the natural world and imposing less load to the environment attract attention, because they are free from ozone layer destruction effect, combustibility or toxicity and, furthermore, they are extremely friendly to the environment as their global warming potential (GWP) is 1, and in addition, they are economical.

There, it has been proposed to use CO₂ as refrigerant for hybrid cars and idle stop coping cars taking electricity and gasoline as energy source, or other vehicles, perform the cooling by loading a refrigeration circuit provided with compressor driven by electricity, and perform the heating, on the other hand, by the heat of the chilled water for cooling the engine.

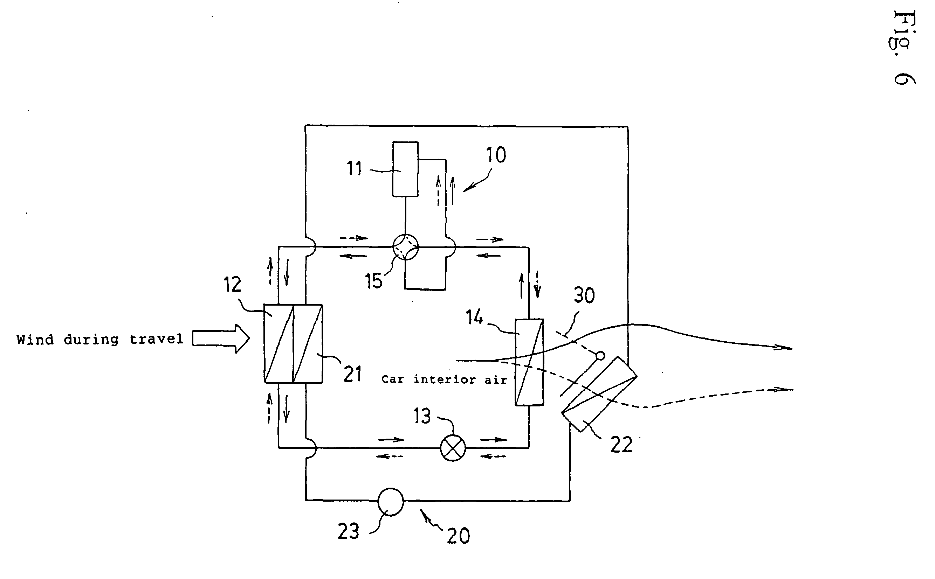

Fig. 6 shows the composition of an on-vehicle air-conditioner for air-conditioning of the prior art, having a refrigeration circuit 10, a cooling water circuit 20 and a damper apparatus 30 for controlling the flow of the car interior air as necessary components.

The cooling water circuit 20 has a cooling water car exterior heat exchanger 21 designated as what is called radiator where the cooling water circulates in order to cool a not shown engine like as internal combustion engine, a cooling water car interior heat exchanger 22 installed at the car interior side for exchanging heat between the car interior air and the cooling water, a pump 23 for circulating cooling water among them, or others.

The refrigeration circuit 10 is provided with a compressor 11 driven by an electric motor disposed in a not shown closed vessel, a gas cooler (sometimes designated as refrigerant car exterior heat exchanger) 12 for cooling the refrigerant compressed to a high pressure by the compressor 11, an expansion valve 13 for expanding the cooled refrigerant, an evaporator 14 for generating cold heat by vaporizing the refrigerant, a four-way valve 15 for flowing the refrigerant in the direction shown by the continuous line in the drawing or, in the direction shown by the broken line, through switching-over.

In case of cooling by means of the refrigeration circuit 10, the four-way valve 15 is set to circulate the refrigerant as shown by the continuous line arrow. In this case, the refrigerant sucked by the compressor 11 is compressed to a high pressure, and the refrigerant compressed to the high pressure is cooled by the gas cooler 12 (refrigerant car exterior heat exchanger), the cooled refrigerant is vaporized by the evaporator 14 via the expansion valve 13 for generating cold heat, and thereafter, sucked again by the compressor 11 via the four-way valve 15. The car interior air is delivered to the evaporator 14 by a not shown fan, whereby, the refrigerant exchanges heat with the car interior air, evaporates and returns to the compressor 11. As the heat during the evaporation of the refrigerant is afforded from the car interior air, the temperature of the car interior air lowers as much, cooling the car interior.

It should be appreciated that, at this time, if the car interior air that has exchanged heat with the evaporator 14 is sent to the cooling water car interior heat exchanger 22, the temperature of the car interior air once cooled elevates, therefore, a damper apparatus 30 moves to the position shown by the continuous line in order to prevent the car interior air from being sent to the cooling water car interior heat exchanger 22.

On the other hand, during the heating operation, the four-way valve 15 is set to circulate the refrigerant as shown by the broken line arrow. In this case, the refrigerant sucked by the compressor 11 is compressed to a high pressure, and the refrigerant compressed to the high pressure is sent to the evaporator 14 via the four-way valve 15, the refrigerant is cooled using this evaporator 14 as gas cooler, the cooled refrigerant is sent to the gas cooler 12 via the expansion valve 13, the refrigerant is vaporized using this gas cooler 12 as evaporator (refrigerant car exterior heat exchanger) for generating cold heat, and thereafter, sucked again by the compressor 11 via the four-way valve 15. The car interior air is sent to the evaporator 14 used as gas cooler by a not shown fan, whereby, the refrigerant exchanges heat with the car interior air to cool. As the heat during the refrigeration of the refrigerant is afforded to the car interior air, the temperature of the car interior air elevates as much, and the car interior will be heated. On the other hand, the pump 23 is driven at the same time as the vehicle is driven, the cooling water circulates, and the heating by the cooling water circuit 20 is performed simultaneously.

By setting the damper apparatus 30 at the dot line position, the car interior air is sent by a not shown fan and heated by the evaporator 14 used as gas cooler, the heated car interior air is sent to the cooling water car interior heat exchanger 22 and heated again for performing the heating. Nonetheless, when the refrigeration circuit is used for heating during the travel, in winter or others, of a vehicle having on board such on-vehicle air-conditioner for air-conditioning, frosting occurs on the refrigerant car exterior heat exchanger 12, and the performance of the refrigerant car exterior heat exchanger 12 deteriorates. Therefore, defrosting operation is performed; however, there was a problem that the defrosting can not be realized easily, because a low temperature air flows into the refrigerant car exterior heat exchanger.

In addition, when the refrigeration circuit is used for cooling during a summer high temperature traffic congestion or others, in a vehicle having on board such on-vehicle air-conditioner for air-conditioning, there was a problem that the cooling efficiency of the refrigerant car exterior heat exchanger 12 deteriorates due to the radiation heat of drivers such as engine, motor or others and the flow of hot air from one's vehicle, the exhaust heat or others of vehicles traveling ahead, the refrigerant ends up being cooled insufficiently, and the car interior cooling becomes unsatisfactorily.

Also, when the refrigeration circuit is used for cooling during summer or others, in a vehicle having on board such on-vehicle air-conditioner for air-conditioning, there was a problem that the cooling efficiency of the refrigerant car exterior heat exchanger 12 deteriorates and the refrigerant ends up being cooled insufficiently, if the refrigerant car exterior heat exchanger 12 is exposed to direct sunlight, and the car interior cooling becomes unsatisfactorily.

US5,284,025 discloses and air conditioning apparatus for an electrically powered motor vehicle. The air conditioning apparatus has a vehicle exterior heat exchanger which is provided in a duct with a fan. Two damper valves are provided in front of the heat exchanger, the first valve for opening an intake air duct and the second valve for opening a duct to a drive motor. A third damper valve is provided located behind the heat exchanger. When the air conditioning apparatus is in a cooling mode, the first and third valves are opened and the second valve is closed, such that the fan can draw intake air through the heat exchanger. When the air conditioning apparatus is in heating mode, the second and third valves are opened and the first valve is closed such that the fan can draw warm air from the motor through the heat exchanger. All the valves may be closed and the fan stopped when the air conditioning apparatus is in the heating mode to defrost the heat exchanger.

It is an object of the present invention to provide an on-vehicle air-conditioner for air-conditioning that can solve problems of the prior art, and perform effectively cooling, heating, defrosting or others, even in case of using for example CO₂ refrigerant, in vehicles such as hybrid cars taking electricity and gasoline as energy source, idle stop coping cars or others.

### Disclosure of the Invention

The Inventors have studies diligently to solve problems of the prior art, found that the defrosting can be realized by installing at least one opening and closing duct for regulating the air inflow rate in front of or behind the refrigerant car exterior heat exchanger 12 and controlling conveniently the opening/closing thereof according to the situation, in short by preventing cold air from flowing in the refrigerant car exterior heat exchanger 12, the car interior can be cooled sufficiently by preventing hot air from flowing so much in the refrigerant car exterior heat exchanger 12 during a summer hot traffic congestion or the like and at the same time by blocking off the radiation heat of drivers such as engine, motor or others and the flow of hot air from one's vehicle, the exhaust heat of vehicles traveling ahead, or others, and the car interior can be cooled sufficiently by preventing the refrigerant car exterior heat exchanger 12 from being exposed to direct sunshine, and thereby came to realize the present invention.

According to the present invention there is provided an on-vehicle air-conditioner for air-conditioning according to claim 1.

At least one of said ducts is controlled to close, for defrosting the frost deposited on said refrigerant car exterior heat exchanger, when using the refrigeration circuit for heating.

Conveniently, said first duct is controlled to close, and the air used for cooling the engine, motor or motor driving circuit and increased in temperature is sent by lowering the speed of rotations through the reverse rotation of a fan so as to pass through said refrigerant car exterior heat exchanger.

Advantageously, said fan is stopped.

According to the invention at least one of said ducts is controlled to half-open, during the use of the refrigeration circuit for cooling.

Advantageously, said first duct is controlled to half-open, in case where the direct sunshine affects adversely the heat exchange of said refrigerant car exterior heat exchanger, during the use of the refrigeration circuit for cooling.

Advantageously, the refrigerant is CO₂.

Preferably, the refrigerant is a hydrocarbon system refrigerant.

### Brief Description of The Drawings

Fig. 1 is an illustrative drawing for schematically describing 1 embodiment of a vehicle having on board an on-vehicle air-conditioner for air-conditioning of the present invention;
Fig. 2 is an illustrative drawing for schematically describing a shape example and a use example of an opening and closing duct for air inflow rate regulation used in the present invention;
Fig. 3 is an illustrative drawing for schematically describing another use example of the opening and closing duct for air inflow rate regulation used in the present invention shown in Fig. 2;
Fig. 4 is an illustrative drawing for schematically describing another use example of the opening and closing duct for air inflow rate regulation used in the present invention shown in Fig. 2;
Fig. 5 is an illustrative drawing for schematically describing another use example of the opening and closing duct for air inflow rate regulation used in the present invention shown in Fig. 2; and
Fig. 6 is an illustrative drawing showing the composition of an on-vehicle air-conditioner of the prior art.

10 indicates a refrigeration circuit, 11 a compressor, 12 a gas cooler (refrigerant car exterior heat exchanger), 13 an expansion valve, 14 an evaporator, 15 a four-way valve, 20 a refrigeration circuit, 21 a cooling water car exterior heat exchanger, 22 a cooling water car interior heat exchanger, 23 a pump, 30 a damper apparatus, 40 a vehicle, 41 25 an engine, 42 a fan, 43 a first opening and closing duct for air inflow rate regulation, 44 a second opening and closing duct for air inflow rate regulation, 45 a base material, 46 a movable louver, 47 a take-up machine, and 48 a wire for opening regulation.

### Best Mode for Carrying out the Invention

Now, embodiments of the present invention are described in detail using drawings.

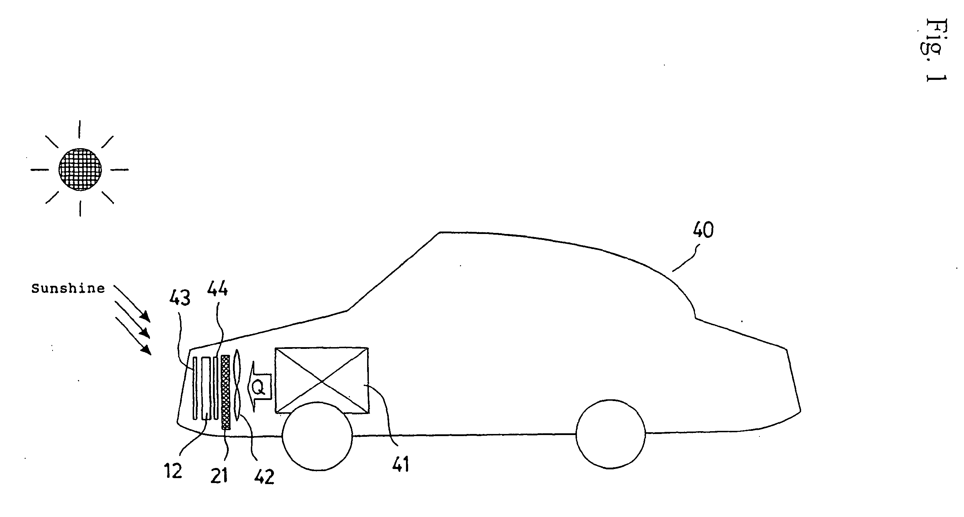

Fig. 1 is an illustrative drawing for schematically describing 1 embodiment of a vehicle having on board an on-vehicle air-conditioner for air-conditioning of the present invention.

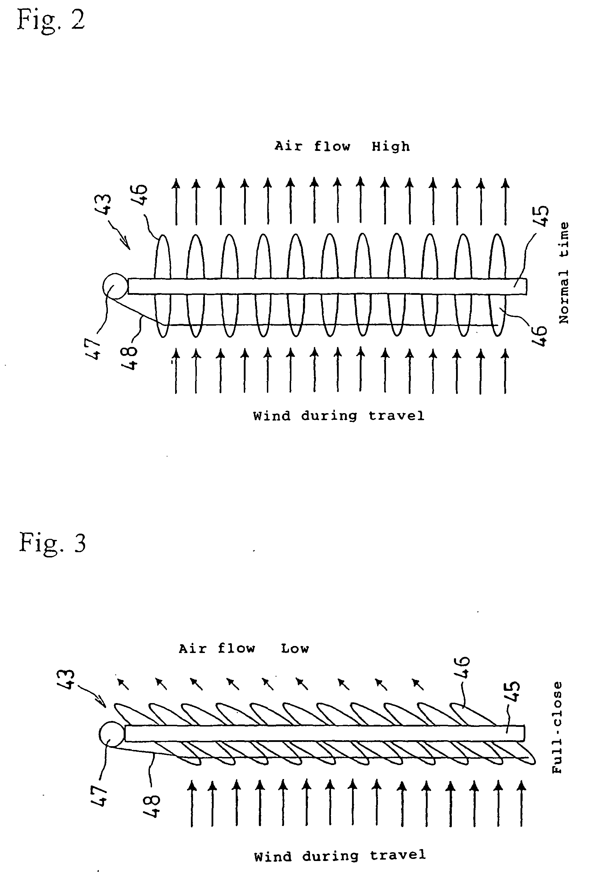

Fig. 2 to 5 are illustrative drawings for schematically describing shape examples and use examples of an opening and closing duct for air inflow rate regulation used in the present invention.

In Fig. 1, 40 represent a vehicle having on board an on-vehicle air-conditioner for air-conditioning of the present invention, 41 an engine and 42 a fan or others. And a refrigerant car exterior heat exchanger 12 provided in the on-vehicle air-conditioner for air-conditioning of the present invention is installed in front of the vehicle 40, and a cooling water car exterior heat exchanger 21 designated as so-called radiator where the cooling water circulates in order to cool the engine 41 is installed behind the same. In addition, a first opening and closing duct for air inflow rate regulation 43 is fitted in front of and adjacent to the refrigerant car exterior heat exchanger 12, and a second opening and closing duct for air inflow rate regulation 44 is fitted behind and adjacent to the refrigerant car exterior heat exchanger 12.

In the present invention, as this example, the first opening and closing duct for air inflow rate regulation 43 and the second opening and closing duct for air inflow rate regulation 44 may be fitted.

The opening and closing duct for air inflow rate regulation 43 (opening and closing duct for air inflow rate regulation 44 may also be of the same composition as 43) comprises a base material 45, a number of movable louvers 46 mounted on the base metal 45, a take-up machine 47 disposed at one end of the base metal 45, a wire for opening regulation 48 linked to the take-up machine 47, or others and the air inflow rate can be adjusted through the rotation of the movable louvers 46 by winding up the wire for opening regulation 48 or, on the contrary, by unwinding the wire for opening regulation 48, through the automatic or manual operation of the take-up machine.

Material and shape of the base material 45 or movable louver 46, or the moving method of the movable louver 46 are not specified particularly.

As material of the base material 45 or movable lover 46, not only metals such as aluminum, but also, for example, engineering plastic materials presenting light weight, good strength, heat resistance, heat insulation or others can be used advantageously.

As shown in Fig. 2, normally, it is preferable to compose to increase the air inflow rate by positioning the movable louver 46 of the opening and closing duct for air inflow rate regulation 43 and opening and closing duct for air inflow rate regulation 44 approximately at right angles to the base material 45.

Then, frosting may sometimes happen on the refrigerant car exterior heat exchanger 12, when the refrigeration circuit is used for heating during the travel of the vehicle 40 in winter or others. There, the air inflow rate is reduced by positioning the movable louver 46 of the first opening and closing duct for air inflow rate regulation 43 in the full closed state, as shown in Fig. 3, in order to prevent a quantity of cold air from entering the refrigerant car exterior heat exchanger 12 during the travel.

By composing in such a way, the refrigerant car exterior heat exchanger 12 can be defrosted easily, as the cold air does not enter there, and there will be no problem of performance deterioration of the refrigerant car exterior heat exchanger 12.

Though not shown, the second opening and closing duct for air inflow rate regulation 44 is not particularly specified, it is preferable to let the movable louver 46 for example in full-close, half-open or full-open state.

Next, other methods for defrosting the frost deposited on the refrigerant car exterior heat exchanger 12 as mentioned above.

In case of defrosting the frost deposited on the refrigerant car exterior heat exchanger 12, the movable louver 46 of the first opening and closing duct for air inflow rate regulation 43 is controlled to close and, at the same time, the movable louver 46 of the second opening and closing duct for air inflow rate regulation 44 is positioned to in a full-open state, and the speed of rotations of is reduced by rotating the fan 42 in the reverse direction so as to send the air used for cooling the engine 41 and increased in temperature to pass through the refrigerant car exterior heat exchanger 12.

Though not shown, in case of hybrid cars taking electricity and gasoline as energy source, idle stop coping cars or others, the air used for cooling a driving motor or a motor driving circuit and increased in temperature is sent to pass through the refrigerant car exterior heat exchanger 12.

By composing in such a way, the air increased in temperature makes the defrosting easier, and there will be no problem of performance deterioration of the refrigerant car exterior heat exchanger 12. Next, other methods for defrosting the frost deposited on the refrigerant car exterior heat exchanger 12 shall be described.

In case of defrosting the frost deposited on the refrigerant car exterior heat exchanger 12, the movable louver 46 of the first opening and closing duct for air inflow rate regulation 43 is controlled to close and the fan 42 is stopped. As for the movable louver 46 of the second opening and closing duct for air inflow rate regulation 44, it is not particularly specified, and is positioned for example in the full-close, half-open or full-open state.

By composing in such a way, the refrigerant car exterior heat exchanger 12 can be defrosted easily, as the cold air does not enter there, and there will be no problem of performance deterioration of the refrigerant car exterior heat exchanger 12.

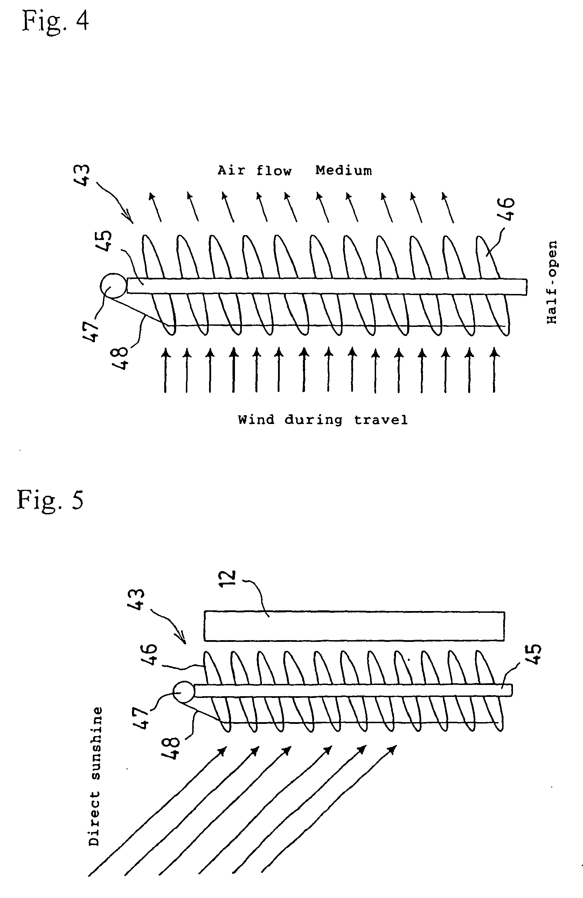

Besides, in case of driving a vehicle 40 in a summer hot traffic congestion time or others by using the refrigeration circuit for cooling, as shown in Fig. 4, the movable louver 46 of the first opening and closing duct for air inflow rate regulation 43 is positioned to the half-open state for setting the air inflow rate to the medium level. By setting the air inflow rate to the medium level, the deterioration of cooling capacity of the refrigerant car exterior heat exchanger 12 can be controlled, prevented by deterring the air heated to a high temperature by the heat from the road surface in asphalt or concrete or the exhaust heat from vehicle traveling ahead from flowing in the refrigerant car exterior heat exchanger 12. The deterioration of refrigeration efficiency of the refrigerant car exterior heat exchanger 12 can be controlled, prevented by blocking most of radiation heat from the engine 41 (or from a driver such as a not shown motor) by positioning also the movable louver 46 of the second opening and closing duct for air inflow rate regulation 44 to the half-open state.

Also, when the vehicle 40 is traveling using the refrigeration circuit for cooling during a summer high temperature time or the like, if the refrigerant car exterior heat exchanger 12 is exposed to an intense direct sunshine and heated and exerts adversely on the heat exchange, as shown in Fig. 5, the influence of sunshine can be reduced by positioning the movable louver 46 of the first opening and closing duct for air inflow rate regulation 43 approximately to the half-open state.

Furthermore, the deterioration of refrigeration efficiency of the refrigerant car exterior heat exchanger 12 can be controlled, prevented by blocking most of radiation heat from the engine 41 by positioning also the movable louver 46 of the second opening and closing duct for air inflow rate regulation 44 to the half-open state, for example.

Especially, in case of using CO₂ as refrigerant, the car interior sometimes cannot be cooled sufficiently, if the deterioration of refrigeration efficiency of the refrigerant car exterior heat exchanger 12 due to the heat from the road surface in asphalt or concrete or the exhaust heat from vehicle traveling ahead, radiation heat from an engine, or intense sunshine increases the refrigerant temperature and lowers the refrigerating capacity; however, the use of the on-vehicle air-conditioner for air-conditioning permits to assure a satisfactory cooling of the car interior even in case of using CO₂ as refrigerant.

It should be appreciated that the description of the aforementioned embodiments is only illustrative of the present invention and does not intended to limit the invention described in what is claimed, nor reduce the scope. Moreover, the composition of respective parts of the present invention in not limited to the aforementioned embodiments, but can be modified variously without departing from the technical scoped described in the claims.

The on-vehicle air-conditioner for air-conditioning of claim 1 of the present invention is an on-vehicle air-conditioner for air-conditioning comprising a refrigeration circuit provided with a refrigerant car exterior heat exchanger installed for exchanging heat with the car exterior air that can be used for cooling and for heating, and at least one opening and closing duct for air inflow rate regulation installed in front of and/or behind the refrigerant car exterior heat exchanger, problems of the prior art can be resolved, cooling, having a remarkable effect of heating, defrosting or others can be performed effectively, even in case of using for example CO₂ refrigerant or hydrocarbon refrigerant, in vehicles such as hybrid cars taking electricity and gasoline as energy source, idle stop coping cars or others, by controlling conveniently the opening/closing of its opening and closing duct for air inflow rate regulation according to the situation.

The on-vehicle air-conditioner for air-conditioning of claim 2 of the present invention, is the on-vehicle air-conditioner for air-conditioning, wherein at least one of the ducts installed in front of and/or behind the refrigerant car exterior heat exchanger is controlled to close, for defrosting the frost deposited on the refrigerant car exterior heat exchanger by using the refrigeration circuit for heating during the travel in winter or others, having thereby a remarkable effect of deferring cold air from flowing in the refrigerant car exterior heat exchanger during the defrosting and allowing to defrost easily.

The on-vehicle air-conditioner for air-conditioning of claim 3 of the present invention, is the on-vehicle air-conditioner for air-conditioning, wherein at least one of the ducts installed in front of and/or behind the refrigerant car exterior heat exchanger is controlled to close, and the air used for cooling the engine, motor or motor driving circuit and increased in temperature is sent by lowering the speed of rotations through the reverse rotation of the fan so as to pass through the refrigerant car exterior heat exchanger, for defrosting the frost deposited on the refrigerant car exterior heat exchanger by using the refrigeration circuit for heating during the travel in winter or others, having thereby a remarkable effect of allowing to defrost more easily.

The on-vehicle air-conditioner for air-conditioning of claim 4 of the present invention, is the on-vehicle air-conditioner for air-conditioning, wherein at least one of the ducts installed in front of and/or behind the refrigerant car exterior heat exchanger is controlled to close, and the the fan is stopped, for defrosting the frost deposited on the refrigerant car exterior heat exchanger by using the refrigeration circuit for heating during the travel in winter or others, having thereby a remarkable effect of deferring cold air from flowing in the refrigerant car exterior heat exchanger during the defrosting and allowing to defrost easily..

The on-vehicle air-conditioner for air-conditioning of claim 5 of the present invention, is the on-vehicle air-conditioner for air-conditioning, wherein at least one of the ducts installed in front of and/or behind the refrigerant car exterior heat exchanger is controlled to half-open, during the use of the refrigeration circuit for cooling heating during a summer hot traffic congestion or others, having thereby a remarkable effect of preventing hot air from flowing so much in the refrigerant car exterior heat exchanger, blocking off the radiation heat of drivers such as engine, motor or others and allowing to cool the car interior sufficiently by controlling, preventing adverse effects by the engine radiation heat, exhaust heat of vehicles traveling ahead, or others.

The on-vehicle air-conditioner for air-conditioning of claim 6 of the present invention, is the on-vehicle air-conditioner for air-conditioning, wherein at least one of the ducts installed in front of and/or behind the refrigerant car exterior heat exchanger is controlled to half-open, in case where the direct sunshine affects adversely the heat exchange of the refrigerant car exterior heat exchanger, during the use of the refrigeration circuit for cooling, having thereby a remarkable effect of reducing the effect of direct sunshine, blocking off the radiation heat of drivers such as engine, motor or others and allowing to cool the car interior sufficiently.

The on-vehicle air-conditioner for air-conditioning of claim 7 of the present invention, is the on-vehicle air-conditioner for air-conditioning, wherein the refrigerant is CO₂, having thereby remarkable effects of low load to the environment, absence of ozone layer destruction effect, combustibility or toxicity and, being extremely friendly to the environment as its global warming potential (GWP) is 1, and in addition, being economical. Further, it has a remarkable effect of controlling the elevation of the refrigerant temperature and assuring a satisfactory cooling of the car interior even when the refrigeration circuit is used for cooling during a summer hot time or others.

The on-vehicle air-conditioner for air-conditioning of claim 8 of the present invention, is the on-vehicle air-conditioner for air-conditioning, wherein the refrigerant is a hydrocarbon system refrigerant, having thereby remarkable effects of low load to the environment, absence of ozone layer destruction effect, combustibility or toxicity and, being extremely friendly to the environment as its global warming potemtial (GWP) is 1, and in addition, being economical. Further, it has a remarkable effect of controlling the elevation of the refrigerant temperature and assuring a satisfactory cooling of the car interior even when the refrigeration circuit is used for cooling during a summer hot time or others.

### Industrial Applicability

The industrial use value of the on-vehicle air-conditioner for air-conditioning of the present invention, comprising a refrigeration circuit provided with a refrigerant car exterior heat exchanger installed for exchanging heat with the car exterior air that can be used for cooling and for heating, and at least one opening and closing duct for air inflow rate regulation installed in front of and/or behind the refrigerant car exterior heat exchanger, is considerably important, because problems of the prior art can be resolved, cooling, heating, defrosting or others can be performed effectively, even in case of using for example CO₂ refrigerant or hydrocarbon refrigerant, in vehicles such as hybrid cars taking electricity and gasoline as energy source, idle stop coping cars or others, by controlling conveniently the opening/closing of its opening and closing duct for air inflow rate regulation according to the situation.

## Claims

1. An on-vehicle air-conditioner for air-conditioning comprising: a refrigeration circuit provided with a refrigerant car exterior heat exchanger (12) installed for exchanging heat with the car exterior air that can be used for cooling and for heating, a first opening and closing duct (43) for air inflow rate regulation installed in front of said refrigerant car exterior heat exchanger (12), and a second opening and closing duct (44) for air (12) inflow rate regulation installed behind said refrigerant car exterior heat exchanger (12), the air-conditioner being **characterised in that**: an engine (41), driving motor (41) or motor driving circuit (41) is located behind said second opening and closing duct (44) such that when both ducts are open air for cooling said engine (41), driving motor (41) or motor driving circuit (41) can first pass through the refrigerant car exterior heat exchanger (12), and wherein the arrangement is such that both said first opening and closing duct (43) and said second open and closing duct (44) can be placed in their full open position; that with said first opening and closing duct (43) in its closed position, said second opening and closing duct (44) can be placed in its fully closed, half open or fully open position; and that with said first opening and closing duct (43) in its half open position and said second opening and closing duct (44) can also be placed in its half open position.

2. The on-vehicle air-conditioner of claim 1, wherein at least one of said ducts (43,44) is controlled to close, for defrosting the frost deposited on said refrigerant car exterior heat exchanger (12), when using the refrigeration circuit for heating.

3. The on-vehicle air-conditioner of claim 2, wherein said first duct (43) is controlled to close, and the air used for cooling the engine (41), motor (41) or motor driving circuit (41) and increased in temperature is sent by lowering the speed of rotations through the reverse rotation of a fan (42) so as to pass through said refrigerant car exterior heat exchanger (12).

4. The on-vehicle air-conditioner of claim 2, wherein said fan (42) is stopped.

5. The on-vehicle air-conditioner of claim 1, wherein at least one of said ducts (43,44) is controlled to half-open, during the use of the refrigeration circuit for cooling.

6. The on-vehicle air-conditioner of claim 1 wherein said first duct (43) is controlled to half-open, in case where the direct sunshine affects adversely the heat exchange of said refrigerant car exterior heat exchanger (12), during the use of the refrigeration circuit for cooling.

7. The on-vehicle air-conditioner of any of claims 1 to 6, wherein the refrigerant is CO₂.

8. The on-vehicle air-conditioner of any of claims 1 to 6, wherein the refrigerant is a hydrocarbon system refrigerant.

## Patentansprüche

1. Fahrzeugklimaanlage zum Klimatisieren, mit: einem Kältekreislauf, der mit einem außerhalb des Fahrzeugs angeordneten Kältemittelwärmetauscher (12) versehen ist, der zum Austauschen von Wärme mit der außerhalb des Fahrzeugs befindlichen Luft eingebaut ist, und der zum Kühlen und zum Heizen verwendet werden kann, einer ersten sich öffnenden und schließenden Leitung (43) zur Regelung der Lufteinströmungsrate, die vor dem genannten, außerhalb des Fahrzeugs angeordneten Kältemittelwärmetauscher (12) eingebaut ist, und einer zweiten sich öffnenden und schließenden Leitung (44) zur Regelung der Lufteinströmungsrate (12), die hinter dem genannten, außerhalb des Fahrzeugs angeordneten Kältemittelwärmetauscher (12) angeordnet ist, wobei die Klimaanlage **dadurch gekennzeichnet ist, daß** eine Maschine (41), ein Antriebsmotor (41) oder eine Motorantriebsschaltung (41) hinter der genannten zweiten sich öffnenden und schließenden Leitung (44) angeordnet ist, so daß dann, wenn beide Leitungen offen sind, Luft zum Kühlen der genannten Maschine (41), des Antriebsmotors (41) oder der Motorantriebsschaltung (41) durch den außerhalb des Fahrzeugs angeordneten Kältemittelwärmetauscher (12) strömen kann; und wobei die Anordnung so ist, daß sowohl die genannte erste sich öffnende und schließende Leitung (43) als auch die genannte zweite sich öffnende und schließende Leitung (44) in ihre vollständig geöffnete Position gebracht werden kann, daß dann, wenn die genannte erste sich öffnende und schließende Leitung 43 in ihrer geschlossenen Position ist, die genannte zweite sich öffnende und schließende Leitung (44) in ihre vollständig geschlossene, halb offene oder vollständig geöffnete Position gebracht werden kann; und daß dann, wenn die genannte erste sich öffnende und schließende Leitung (43) sich in ihrer halb geöffneten Stellung befindet, auch die genannte zweite sich öffnende und schließende Leitung (44) in ihrer halb geöffneten Stellung angeordnet werden kann.

2. Fahrzeugklimaanlage nach Anspruch 1, **dadurch gekennzeichnet, daß** zumindest eine der genannten Leitungen (43, 44) so gesteuert wird, daß sie sich schließt, um das Eis, das sich auf dem genannten außerhalb des Fahrzeugs angeordneten Kältemittelwärmetauscher (12) abgesetzt hat, zu enteisen, wenn der Kältekreislauf zum Heizen verwendet wird.

3. Fahrzeugklimaanlage nach Anspruch 2, **dadurch gekennzeichnet, daß** die genannte erste Leitung (43) so gesteuert wird, daß sie sich schließt, und daß die Luft, die zum Kühlen der Maschine (41), des Motors (41) oder der Motorantriebsschaltung (41) verwendet wird und deren Temperatur ansteigt, in Strömung versetzt wird, indem die Drehzahl durch die umgekehrte Drehung eines Ventilators (42) abgesenkt wird, so daß sie durch den genannten außerhalb des Fahrzeug angeordneten Kältemittelwärmetauscher (12) hindurchgeht.

4. Fahrzeugklimaanlage nach Anspruch 2, **dadurch gekennzeichnet, daß** der genannte Ventilator (42) gestoppt wird.

5. Fahrzeugklimaanlage nach Anspruch 1, **dadurch gekennzeichnet, daß** zumindest eine der genannten Leitungen (43, 44) so gesteuert wird, daß sie halb geöffnet ist, während der Verwendung des Kältekreislaufs zum Kühlen.

6. Fahrzeugklimaanlage nach Anspruch 1, **dadurch gekennzeichnet, daß** die genannte erste Leitung (43) so gesteuert wird, daß sie halb geöffnet ist, in dem Fall, daß die direkte Sonneneinstrahlung den Wärmetausch des genannten außerhalb des Fahrzeugs angeordneten Kältemittelwärmetauschers (12) negativ beeinflußt, während der Verwendung des Kältekreislaufs zum Kühlen.

7. Fahrzeugklimaanlage nach einem der Ansprüche 1 bis 6, **dadurch gekennzeichnet, daß** das Kältemittel CO₂ ist.

8. Fahrzeugklimaanlage nach einem der Ansprüche 1 bis 6, **dadurch gekennzeichnet, daß** das Kältemittel ein Kältemittel aus dem Kohlenwasserstoffsystem ist.

## Revendications

1. Dispositif de conditionnement d'air pour véhicule pour conditionner l'air, comprenant :
un circuit de réfrigération doté d'un échangeur de chaleur extérieur de réfrigérant de voiture (12) installé pour échanger la chaleur avec l'air extérieur de la voiture qui peut être utilisé pour le refroidissement et le chauffage, un premier conduit d'ouverture et de fermeture (43) pour la régulation de la vitesse du flux d'entrée d'air installé en face dudit échangeur de chaleur extérieur de réfrigérant de voiture (12), un second conduit d'ouverture et de fermeture (44) pour la régulation de la vitesse du flux d'entrée d'air (12) installé derrière ledit échangeur de chaleur extérieur de réfrigérant de voiture (12), ledit dispositif de conditionnement d'air étant **caractérisé en ce qu'**un moteur (41), un moteur d'entraînement (41) ou un circuit d'entraînement de moteur (41) est situé derrière ledit second conduit d'ouverture et de fermeture (44) de sorte que lorsque les deux conduits sont ouverts, l'air pour refroidir ledit moteur (41), le moteur d'entraînement (41) ou le circuit d'entraînement de moteur (41) peut passer dans un premier temps par l'échangeur de chaleur extérieur de réfrigérant de voiture (12) et dans lequel l'agencement est tel qu'à la fois ledit premier conduit d'ouverture et de fermeture (43) et ledit second conduit d'ouverture et de fermeture (44) peuvent être placés dans leur position ouverte complète; **en ce qu'**avec le premier conduit d'ouverture et de fermeture (43) dans sa position fermée, ledit second conduit d'ouverture et de fermeture (44) peut être placé dans sa position complètement fermée, à moitié ouverte ou complètement ouverte ; et **en ce qu'**avec ledit premier conduit d'ouverture et de fermeture (43) dans sa position à moitié ouverte et ledit second conduit de fermeture et d'ouverture (44) peut également être placé dans sa position à moitié ouverte.

2. Dispositif de conditionnement d'air pour véhicule selon la revendication 1, dans lequel au moins l'un desdits conduits (43, 44) est commandé pour se fermer, afin de dégivrer le gel déposé sur ledit échangeur de chaleur extérieur de réfrigérant de voiture (12) lorsque l'on utilise le circuit de réfrigération pour le chauffage.

3. Dispositif de conditionnement d'air pour véhicule selon la revendication 2, dans lequel ledit premier conduit (43) est commandé pour se fermer, et l'air utilisé pour refroidir le moteur (41), le moteur (41) ou le circuit d'entraînement de moteur (41) et l'air augmenté en température est envoyé en abaissant la vitesse de rotation par le biais de la rotation inverse d'un ventilateur (42) pour passer à travers ledit échangeur de chaleur extérieur de réfrigérant de voiture (12).

4. Dispositif de conditionnement d'air pour véhicule selon la revendication 2, dans lequel ledit ventilateur (42) est arrêté.

5. Dispositif de conditionnement d'air selon la revendication 1, dans lequel au moins l'un desdits conduits (43, 44) est contrôlé pour s'ouvrir à moitié, pendant l'utilisation du circuit de réfrigération pour le refroidissement.

6. Dispositif de conditionnement d'air pour véhicule selon la revendication 1, dans lequel ledit premier conduit (43) est commandé pour s'ouvrir à moitié, dans le cas dans lequel la lumière directe du soleil affecte de manière indésirable l'échange de chaleur dudit échangeur de chaleur extérieur de réfrigérant de voiture (12), pendant l'utilisation du circuit de réfrigération pour le refroidissement.

7. Dispositif de conditionnement d'air pour véhicule selon l'une quelconque des revendications 1 à 6, dans lequel le réfrigérant est du CO₂.

8. Dispositif de conditionnement d'air pour véhicule selon l'une quelconque des revendications 1 à 6, dans lequel le réfrigérant est un réfrigérant à système d'hydrocarbure.
